(19) Europäisches Patentamt
European Patent Office
Office européen des brevets

(11) EP 1 471 084 A2

(12) EUROPÄISCHE PATENTANMELDUNG

(43) Veröffentlichungstag:
**27.10.2004 Patentblatt 2004/44**

(21) Anmeldenummer: **04450076.7**

(22) Anmeldetag: **31.03.2004**

(51) Int Cl.[7]: **C08F 255/02**, C08F 257/02, C08F 265/04, C08F 265/08, C08F 283/02, C08F 283/04, C23C 18/20, C25D 5/56, C23C 28/02

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(30) Priorität: **01.04.2003 AT 5102003**

(71) Anmelder: **ARC Seibersdorf research GmbH**
**1010 Wien (AT)**

(72) Erfinder:
- **Gruber, Heinrich F.**
  **1190 Wien (AT)**
- **Knaus, Simone**
  **1100 Wien (AT)**
- **Jauk, Sigrid**
  **1110 Wien (AT)**
- **Liska, Alexander**
  **1180 Wien (AT)**
- **Liska, Robert**
  **1200 Wien (AT)**
- **Wendrinsky, Josef**
  **1060 Wien (AT)**
- **Sattler, Peter**
  **2351 Wiener Neudorf (AT)**

(74) Vertreter: **Wildhack, Helmut, Dipl.-Ing. Dr. et al**
**Patentanwälte**
**Dipl.-Ing. Dr. Helmut Wildhack**
**Dipl.-Ing. Dr.Gerhard Jellinek**
**Landstrasser Hauptstrasse 50**
**1030 Wien (AT)**

(54) **Polymere für die Metallbeschichtung und Verfahren zu deren Herstellung**

(57) Die Erfindung betrifft ein oberflächenmodifiziertes Co-Polymer, welches einer Beschichtung mit einem haftfesten Metall-Überzug durch stromlose und/oder galvanische Abscheidung von Metallen zugänglich gemacht ist, bzw. daraus, bevorzugt durch Thermoplast-Formgebung, gefertigte Gegenstände und dgl., welches dadurch gekennzeichnet ist,

- dass mit zumindest einem - einer Metallabscheidung als solches nicht oder nur schwierig zugänglichen Grund-(Co-)Polymerisat auf Basis mindestens eines Polyolefins, Polystyrols, Polyvinylhalogenids, Poly-$C_1$-$C_{17}$-alkyl(meth)acrylats oder Polyacrylnitrils Polyethylenterephthalats, Polyacetals, Polycarbonats und/oder Polyamids, gebildet sind, wobei das Grund-(Co-)Polymerisat, entweder auf der gesamten Oberfläche oder auf jeweils für eine Metallisierung vorgesehenen Teilbereichen der Oberfläche

  mit mindestens einem Maleinimid-Derivat der allgemeinen Formel I

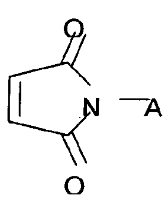

, (I)

einem aromatischen Azid der Formel II

EP 1 471 084 A2

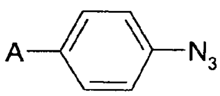

, (II)

oder einem Methacrylat bzw. Acrylat der Formel III bzw. IV

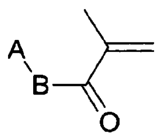

, (III)

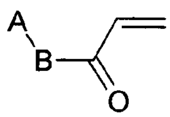

, (IV)

in welchen Formeln I bis IV
B für eine -O- oder -NH- Gruppe steht und in der
A die einen Rest der allgemeinen Formeln Ia, Ib, Ic und Id stehen,
radikalisch gepfropft ist.

Sie betrifft weiters die Herstellung der neuen einer Metallisierung zugänglichen , mit den genannten Maleinderivaten gepfropften Polymere bzw. Gegenstände daraus sowie die Metallisierung der neuen Polymere bzw. von Gegenständen daraus.

## Beschreibung

Die vorliegende Erfindung betrifft neue Polymere bzw. Copolymere auf Basis von einer Modifizierung unterworfenen, bisher als nicht oder jedenfalls schwer metallisierbar bekannten Polymeren, und hat das Ziel, eine wesentliche Verbesserung der Haftung von aus Metall-Lösungen erfolgenden Metallbeschichtungen auf der Oberfläche von daraus gefertigten Gegenständen, Formkörpern u.dgl. zu schaffen.

Sie betrifft weiters Verfahren zur Herstellung der neuen Polymere bzw. Copolymere und schließlich die Herstellung von mit einem Metall-Überzug versehenen Gegenständen, Formkörpern od.dgl., aus den neuen (Co-)Polymeren.

Es ist bekannt, dass polymere Werkstoffe vor dem chemischen und dem nachfolgenden galvanischen Metallisieren vorbehandelt werden müssen, wozu auf Kunststoff-Metallisierung, Handbuch für Theorie und Praxis, E.G. Leuze-Verlag, Saulgau (1991) verwiesen sei. Es handelt sich dabei im wesentlichen um Oberflächenbehandlungen, wie z.B. Ätzen der Polymeroberfläche mit starken Säuren, wie z.B. Chromschwefelsäure und/oder starken Oxidationsmitteln, wie z.B. Chromtrioxid-Permanganat, mehrfaches Spülen mit Wasser, Behandlung der Substratoberfläche mit einem geeigneten Aktivierungsbad, wie z.B. mit einer Palladiumsalzlösung mit anschließender chemischer Reduktion des ionogenen Palladiums. Bei diesen Vorbehandlungen sind nicht nur verhältnismäßig viele Verfahrensschritte erforderlich, sondern es werden dabei durchaus aggressive und giftige Chemikalien eingesetzt. Zudem werden bei der anschließenden Metallisierung dennoch nur bei bestimmten Substraten, wie z.B. bei ABS-Kunststoffen ausreichende Haftungen der Metallüberzüge erzielt. Gerade bei den am meisten verbreiteten und billigsten bzw. billigen Massenkunststoffen, wie z.B. Polyethylen und Polypropylen, ist die Herstellung gut haftender Metallüberzüge bis heute problematisch geblieben, wodurch ihre Anwendbarkeit eingeschränkt ist.

In der EP 081 129 ist ein Verfahren zur Aktivierung von Substratoberflächen für die stromlose Metallisierung beschrieben, bei dem die zu metallisierenden Oberflächen von Polymeren mit metallorganischen Verbindungen behandelt werden, welche einerseits komplex gebundene Metalle - vorzugsweise Pd(II)-Komplexe - enthalten, andererseits aber auch geeignete Liganden, die eine Affinität zu der jeweiligen Substratoberfläche haben und durch chemische Reaktion und/oder Adsorption die Haftfestigkeit der Metallüberzüge verbessern. Dadurch wird eine Art "Haftbekeimung" erzielt. Bei Polyolefinen lässt sich wegen deren unpolarer Oberfläche jedoch höchstens eine unbedeutende Verbesserung der Haftfestigkeit erreichen, da die hiefür eingesetzten Pd-Komplexe mit langkettigen Alkylresten lediglich durch schwache Wechselwirkungskräfte an sie gebunden sind.

In der DE 4332734 und in der DE 4333670 sind mit Monomaleimiden gepfropfte Propylencopolymerisate offenbart, worin neben N-Alkyl- und N-Arylmaleinimiden auch Maleinimide mit funktionellen Gruppen wie Carboxyl- bzw. Aminogruppen beansprucht sind und Pfropfcopolymerisate mit guten mechanischen Eigenschaften erhalten werden. Weiters wird in der Beschreibung auch eine gute Haftung dieser Pfropfcopolymere auf polaren Substanzen wie Glas oder Metallen erwähnt, jedoch durch kein Beispiel belegt. Es kann zwar angenommen werden, dass speziell bei Pfropfcopolymerisaten mit polaren funktionellen Maleinimiden, wie bspw. 4-Maleinimidobenzoesäure, eine geringfügige Verbesserung der Haftung erreicht wird, jedoch ist diese für praktische Anwendungen in keiner Weise ausreichend, da die Wechselwirkungen der nur monofunktionellen Ankergruppen mit den Metallatomen zu schwach sind, wie später auch in den Vergleichsbeispielen der vorliegenden Erfindung gezeigt ist.

Kurz soll noch die DE 31239946 A1 erwähnt sein, in welcher ein für die stromlose Metallisierung geeigneter Kunststoffgegenstand beschrieben ist, bei dem auf einem Kunststoffsubstrat ein zumindest halbgehärtetes Produkt einer härtbaren Harzmasse aus einem Gemisch und/oder aus einem Vorreaktionsprodukt von (a) mindestens einer Cyanatverbindung in Form eines polyfunktionellen Cyanatesters, eines Vorpolymerisats des Cyanatesters, eines Co-Vorpolymerisats des Cyanatesters und eines Amins sowie Gemischen davon und (b) mindestens einem Kautschuk vom Dien-Typ ausgebildet ist. Die dort beschriebene aufwendige Mischung wird also auf ein geformtes Substrat, konkret genannt sind Glasfasergewebe, Epoxidharzprepregs und Polyphenylensulfidharz aufgetragen und dort gehärtet. Aus den konkreten Beispielen dieser Schrift geht hervor, dass vor der stromlosen Metallisierung dennoch eine Vorbehandlung mit Chromtrioxid und Schwefelsäure, in der bisher üblichen Weise vorgenommen wird.

Nicht unerwähnt soll schließlich bleiben, dass es an sich bekannt ist, die Oberflächen von Polymeren mittels Maleinimiden, (Meth)acrylaten bzw. Aziden durch Verfahren, wie UV-, IR-, Mikrowellen-, Elektronen-Strahlung od.dgl., in ihren Eigenschaften für verschiedene andere Zwecke als Metallisierung zu modifizieren.

Die Erfindung hat sich die Aufgabe gestellt, modifizierte Polymere sowie ein neues, das Substrat schonendes und verfahrenstechnisch einfaches Verfahren zur Herstellung dieser modifzierten Polymere zu schaffen, welches es ermöglicht, auch bisher schwer bzw. nur unzulänglich metallisierbare Substrate, wie insbesondere Polyolefine mit einem gut haftenden und dauerhaften Metallüberzug zu versehen, wobei ein vorheriges Ätzen oder eine andere, für solche Fälle übliche Oberflächen-Vorbehandlung, bevorzugterweise gänzlich vermieden werden soll.

Diese Aufgabe lässt sich, wie gefunden wurde, dadurch lösen, dass die genannten Polymere mit Maleinimid-, Azid- oder (Meth)acrylat-Derivaten modifiziert werden, welche zwei oder mehrere salz- bzw. komplexbildende Liganden für die Wechselwirkung mit Metallen enthalten.

Gegenstand der vorliegenden Erfindung ist somit ein oberflächenmodifiziertes Polymer bzw. Copolymer, insbesondere ein solches, welches einer Beschichtung mit einem haftfesten Metall-Überzug durch stromlose und/oder galvanische Abscheidung von Metallen zugänglich gemacht ist, bzw. aus dem genannten (Co-)Polymer, bevorzugt durch Thermoplast-Formgebung, gefertigte Gegenstände, Formkörper, Profile, Folien, Bänder, Fasern, Granulate od. dgl., gemäß dem **Kennzeichen des Anspruches 1**.

In die beschriebenen - ohne vorherige Oberflächen-Aufschließung mit aggressiven, hochreaktiven Chemikalien - einer stromlosen und/oder galvanischen Metallabscheidung bisher praktisch nicht oder nur höchst unzulänglich zugänglichen Grund-Polymerisate sind als Folge der Oberflächenmodifizierung die erfindungsgemäß eingesetzten funktionellen Maleinimid-, (Meth)acrylat- bzw Azid-Derivate kovalent angebunden und weisen an ihrer Oberfläche metallbindungs-freundliche funktionelle Gruppen auf.

Die neuen, mit den funktionellen, vorzugsweise mehrfunktionellen, Maleinimid-, (Meth)acrylat- bzw Azid-Derivaten modifizierten Polymere ermöglichen auf Grund der ionischen bzw. koordinativen Wechselwirkung der genannten funktionellen Gruppen mit Metallen auf einfache Weise die Herstellung gut haftender Metallüberzüge, ohne dass eine Vorbehandlung mit giftigen oder ätzenden Chemikalien zur Bildung von zur Metallbindung befähigten Gruppen an deren Oberfläche nötig wären.

Was den Stand der Technik auf dem Gebiet dieser Erfindung betrifft, sei hierzu die EP 370 264 A1 genannt, welche eine hitzebeständige und schlagzähe Polymerzusammensetzung bzw. ein Polymer-Blend, aus 5 bis 95 Gew-% eines Maleinimid-Copolymers, 5 bis 95 Gew-% eines Kautschukharzes und 0 bis 300 Gew-% eines anderen thermoplastischen Harzes betrifft, wobei die Verblendung in einem Zweischnecken-Extruder, beispielsweise bei 280°C, erfolgt. Es ist dort weiters erwähnt, dass die gemäß dieser Schrift erhaltene schlagzähe Harzzusammensetzung durch Plattierung, Vakuumbedampfung oder Sputtern mit einem "glänzenden Überzug" beschichtet werden kann.

Die gesamte EP-A1 ist schwerpunktsmäßig auf die Schaffung von Harzen mit hoher Schlagzähigkeit und Temperaturfestigkeit ausgerichtet, was dort durch die Einmischung eines Maleinimid-Copolymeren, und nicht eines Maleinimid-Monomeren, erreicht wird.

Es ist in der EP-A1 kein Hinweis zu entnehmen, dass eine echte, gezielte Modifizierung von für eine haftfeste Oberflächen-Metallisierung auf elektro-chemischem Wege bisher als nicht geeignet bekanntenen Polymeren angestrebt würde mit dem ausdrücklichen Ziel, dieselben trotz ihrer bisherigen "Nicht-Metallisierbarkeit" ohne die übliche spezielle Oberflächenbehandlung für eine Metallisierung mit hoch haftfesten metallischen Überzügen zu versehen.

In dieser EP-A1 ist weiters weder ein konkretes Metall angegeben ist, mit welchem der dort genannte "glänzende Überzug" zu bilden wäre, noch ein konkretes Verfahren für die Bildung desselben, und es sind dort keinerlei konkrete Angaben bezüglich irgendwelcher Eigenschaften dieser Überzüge und insbesondere bezüglich deren optischer Qualität und Haftfestigkeit auf dem "schwierigen" Polymer-Substrat enthalten.

Ganz entscheidend ist, daß die in dieser EP-A1 geoffenbarten Polymer-Blends einen vom Molekülbau von mit Malein-Derivat-Monomeren gepfropften Polymeren, wie sie die vorliegende Erfindung vorsieht, grundsätzlich verschiedenen Molekülbau aufweisen.

In den in der EP-A1 beschriebenen Polymer-Blends liegen prinzipiell drei Polymere und kein einziges reaktionsfähiges Monomer vor. Eines dieser Polymere enthält in seine Kette "eingebaut" einfache und wenig "funktionelle" Maleinimid-Gruppen als Kettenglieder, die jedoch nicht auf eine "fertige" Polymerkette gesondert aufgepfropft sind.

Alle diese Ausführungen gelten in analoger Weise für die in der weiters bekannt gewordenen JP 228491 A geoffenbarten, ein Füllmittel enthaltende HarzZusammensetzung aus einem Polypropylen-Harz und einem Maleinimid-Copolymer, bei welchem - wie oben deutlich erläutert - das Maleinimid in die Polymerkette eingebaut ist und nicht, wie gemäß der Erfindung vorgesehen, ein Maleinimid-Derivat-Monomer auf ein "fertiges" Polymer gesondert aufgepfropft wird.

In der JP-A ist etwas deutlicher auf ein Beschichten, Plattieren oder Bedampfen des dortigen Polymer-Blends mit einem Metall hingewiesen, so fehlen allerdings auch dort jegliche Angaben über die Qualität und Haftfestigkeit desselben.

Die obigen Ausführungen zum gesamten Stand der Technik auf diesem Gebiet zeigen die wesentlichen Unterschiede zwischen der Struktur der bisher bekannten Maleinimid-Copolymerisate, welche alle mit in die Polymerkette eingebaute Maleinimid-Kettenglieder aufweisen und der Struktur der erfindungsgemäßen bzw. erfindungsgemäß hergestellten und eingesetzten Pfropf-Copolymerisate mit den von einer Polymer-Grundkette sozusagen "weg ragenden" und in Folge ihrer etwa "tentakelartigen" Ausbildung zusammen mit ihren funktionellen Gruppen zu einer hochfesten Chelatbindung von Metallen befähigten und so erst die Fähigkeit zur Bindung des jeweils abzuscheidenden Metalls generierenden und dieselbe wesentlich steigernden Maleinimid-Derivatgruppen.

Durch diese "Chelatisierung" konnten, wie gefunden wurde, zum ersten Mal tatsächlich befriedigende und den heutigen hohen Anforderungen gewachsene Metallüberzüge auf Polymeren, welche sich ohne die bekannte aggressive Oberflächen-Vorbehandlung der Metallisierung im Wesentlichen widersetzt haben, erzielt werden.

Im Rahmen der Erfindung besonders bevorzugt sind metall-beschichtbar oberflächenmodifizierte Polymere gemäß **Anspruch 2**, welche mit den verschiedenen Grund-Polymerisaten und den an sie oberflächen-pfropf-copolymerisierten Maleinimid-, (Meth)acrylat- bzw Azid-Derivaten der dort genannten Formeln I/1, I/2, I/3, I/4, II/1 und/oder III/1 gebildet sind.

Einen weiteren wesentlichen Gegenstand der Erfindung bildet, wie schon eingangs erwähnt, ein neues Verfahren zur Herstellung der neuen, an ihrer Oberfläche metallabscheidungs-freundlich modifizierten Polymere, wie es dem **Anspruch 3** zu entnehmen ist.

Besonders hohen Ansprüchen bezüglich der Haftfestigkeit von Metallen auf Kunststoffen werden Copolymerisate gerecht, welche gemäß dem Anspruch 4 hergestellt werden und auf welche zumindest eines der oben schon erwähnten, im Anspruch 2 im einzelnen genannten Maleinimid-, (Meth)acrylat- bzw Azid-Derivate der Formeln I/1, I/2, I/3, I/4, II/1 und/oder III/1 gepfropft sind.

Soll eine Beschichtung der gesamten Oberfläche eines Gegenstandes, Formkörpers od.dgl. mit einem Metall erfolgen, ist es wichtig, dass im Falle der Aufbringung des in die Oberfläche einzupolymerisierenden Monomeren in Form einer Lösung für eine Bedeckung der gesamten Oberfläche Sorge getragen wird, wobei einem ganz wesentlichen Faktor Rechnung zu tragen ist: Die Benetzung der Oberfläche mit der Monomer-Lösung, -Dispersion, -Druckpaste od. dgl. muss möglichst gleichmäßig und ohne Störungszonen oder Unterschiede in der Oberflächenspannung erfolgen können, wofür beispielsweise die Zugabe eines Tensides in geringen Mengen hilfreich ist.

Wenn z.B. der Auftrag des Monomers durch einmaliges Tauchen des Polymer-Gegenstandes in eine Lösung oder Dispersion desselben zu einer zu geringen Oberflächenbelegung des Polymerisates mit dem in dasselbe zu pfropfenden Monomer führt, so können - jeweils nach Zwischentrocknung - weitere Tauch-Vorgänge erfolgen, bis die letztliche eine gleichmäßige Metallisierung gewährleistende Menge an Monomer pro Flächeneinheit vorliegt, sodass die funktionellen Gruppen in für eine haftfeste Metallisierung ausreichender Menge für die Verankerung des Monomers in der Oberflächenzone des Polymerisat-Grundkörpers durch den Pfropf-Vorgang vorhanden sind.

Sollen nur Teile der Oberfläche metallisiert werden, also z.B. ein Muster, ein Bild, eine Beschriftung od.dgl. aufgebracht werden, so kann dies z.B. durch Bedrucken des Polymerisat-Gegenstandes mit einer das jeweilige Monomer enthaltenden "Druckfarbe bzw. -paste" erfolgen. Es kommt dafür jedes für das Bedrucken von Kunststoffen bekannte lithographische Verfahren in Frage.

Eine andere Möglichkeit besteht im Abdecken der letztlich keine Metallisierung aufweisenden Zonen der Oberfläche mittels entsprechend gestalteter Schablonen od.dgl. und Auftragen des Monomrs bzw. von dessen Lösung, Dispersion, Paste od.dgl. durch Aufwalzen, Aufsprühen od.dgl., welches dann an den Stellen, wo der Monomer-Auftrag erfolgt ist, in die Oberfläche des Polymerisat-Grundkörpers einpolymerisiert wird.

Gemäß einer im Rahmen der vorliegenden Erfindung zumindest gleichwertigen und bei Vorhandensein einer entsprechenden technischen Ausrüstung besonders günstigen Variante kann gemäß **Anspruch 5** so vorgegangen werden,

- dass in einer ersten Stufe im wesentlichen auf die gesamte Oberfläche des genannten Gegenstandes, Formkörpers od.dgl. eine, vorzugsweise zumindest einen Polymerisations-Initiator enthaltende Lösung, Dispersion, Streichmasse, (Druck-)Paste od.dgl., aufgebracht wird, deren wesentliche Komponente durch mit mindestens ein Monomer der im Anspruch 1 bzw. 2 genannten allgemeinen Formeln I bis IV mit den dort genannten Bedeutungen für die Gruppen -Xund -A bzw. der Formeln I/1, I/2, I/3, II/1 oder III/1 gebildet ist, in dünner Schicht aufgetragen wird,
- dass in einer zweiten Stufe, beispielsweise unter Abdeckung aller für eine Metallisierung nicht vorgesehenen Teilbereiche der Oberfläche, z.B. mittels Schablone oder durch Ausrichtung, Konzentrierung, Bündelung, Fokussierung von Strahlung od.dgl. auf die zu metallisierenden Teilbereiche der Oberfläche, nur in den für eine gewünschte Metallisierung vorgesehenen Teilbereichen der Oberfläche durch Einwirkung von Energie, insbesondere Strahlungsenergie, das genannte Monomer in die Oberflächenzone des den Gegenstand, Formkörper od.dgl. bildenden Grund-(Co-)Polymerisates pfropf-copolymerisiert wird, und
- dass in einem dritten Schritt von den der Einwirkung der Energie, insbesondere Strahlungsenergie, nicht unterworfenen Bereichen der Oberfläche des Gegenstandes, Formkörpers od.dgl. die überschüssigen Monomer-Auftragsschicht(en), z.B. durch lösendes Waschen, durch Wischen od.dgl., entfernt wird (werden).

Es wird also ein gewünschtes Muster, eine Schrift od.dgl. auf der gänzlich mit dem Monomer bedeckten Polymerisat-Oberfläche durch das Pfropf-Copolymerisationsmittel, also z.B. durch Strahlung, selbst durch Ankoppelung bzw. Einbindung der Monomermoleküle an bzw. in das Grundpolymerisat-Netzwerk fixiert. Das genannte Mittel, also die für die Pfropfung nötige Energie darf nur an jenen Stellen aktiv sein und wirken, welche dem gewünschten Muster, der Schrift od.dgl. entsprechen.

Erreicht werden kann dies beispielsweise dadurch, dass mittels computergesteuertem (UV-)Laserlichtstrahl, z. B. feinsten Strukturen entsprechende Anteile der Oberfläche eines Polymerisat-Grundkörpers mittels des Monomers modifiziert werden und dass nach dem Entfernen der unverändert gebliebenen Monomer-Lösung bzw. -Dispersion von den nicht bestrahlten Bereichen der Oberfläche der Gegenstand nur dort mit einer Metallschicht versehen ist, wo das Licht einwirken konnte.

Überraschend gute Ergebnisse im Sinne der Zielsetzung der vorliegenden Erfindung lassen sich bei Einhaltung der im **Anspruch 6** im Einzelnen angegebenen Verfahrensparameter erreichen.

Im soeben genannten Sinn ist einer Verfahrensführung unter Einsatz der im **Anspruch 7** genannten Aktivatoren für die Pfropfung der Vorzug zu geben.

Günstig sind weiters die im **Anspruch 8** genannten Methoden zur Pfropfung der Monomere.

An dieser Stelle soll weiters erwähnt werden, dass unter den in diesem Anspruch genannten Methoden auch sichtbares Licht als für die Pfropfung in Frage kommend genannt ist, wobei günstigerweise in Gegenwart von Farbstoffen, die Wasserstoff abstrahieren, wie z.B. Acridine, Xanthene, Azine, Thiazine und Polymethine, insbesondere Methylenblau, Acriflavin, Rose Bengal und Cyanin-Farbstoffe, gearbeitet wird.

Für den die störungsfreie Abscheidung von Metall gewährleistenden Auftrag wird bevorzugt eine Lösung bzw. Dispersion mit mindestens einem der vorher beschriebenen Monomere mit den im **Anspruch 9** genannten Konzentrationen eingesetzt.

Was die für eine haftfeste Metallisierung günstige Flächenbelegung der Polymerisat-Grundkörper mit dem Modifikator-Monomeren betrifft, haben sich die im **Anspruch 10** genannten Oberflächen-Belegungsmengen in der Praxis besonders bewährt.

Bevorzugte Lösungsmittel für die Monomere, welche eine möglichst störungsfreie, gleichmäßige Benetzung der Polymerisat-Grundkörper gewährleisten, nennt der **Anspruch 11.**

Um ein Verfließen bzw. ein Ab- oder Nachtropfen nach dem gegebenenfalls topografisch gezielten Aufbringen der Lösung, Dispersion od.dgl. des jeweils eingesetzten Monomeres zu vermeiden, hat sich ein, wie im **Anspruch 12** beschriebenes Abdampfen bzw. Abdunsten des Lösungs- bzw. Dispersionsmittels nach dem Auftragen des mit demselben verdünnten Polymer-Modifikators als günstig erwiesen.

Schließlich bildet - als aktuelle Konsequenz der neuen monomer-modifizierten, und dadurch einer problemlosen Metallabscheidung in überraschender Weise zugänglich gemachten Co-Polymere und der erfindungsgemäß vorgesehenen Herstellung derselben - einen weiteren wichtigen Gegenstand der vorliegenden Erfindung ein neues Verfahren zur Herstellung von mit einem Metall haftfest oberflächen-beschichteten Gegenständen, Formkörpern, Profilen, Folien, Bändern, Fasern, Granulaten od.dgl., aus einem (Co-)Polymer, wobei eine stromlose dünne Erst-Beschichtung mit einem Metall und danach zumindest eine galvanotechnische Beschichtung mit dem gleichen oder mit einem anderen Metall vorgenommen wird, welches in seinen Einzelheiten im **Anspruch 13** geoffenbart ist.

Die folgenden Beispiele illustrieren in den Herstellungsbeispielen 1 bis 6 die erfindungsgemäße Herstellung der einer Metallisierung zugänglichen, oberflächlich gepfropften Polymere, in den Vergleichsbeispielen A, B und C die Herstellung von nicht mit effizienten Chelatbildenden Verbindungen modifizierten Polymerisaten und in den Anwendungsbeispielen 1 und 2 den Vorgang der Metallisierung der neuen modifizierten Polymere sowie die dabei erzielten Ergebnisse.

Herstellungs-Beispiel 1:

a) Herstellung von N-(4-Maleimidobenzoyl)-nitrilo-diessigsäure

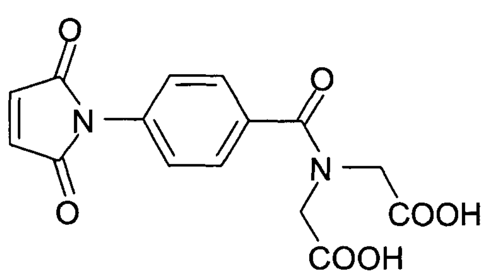

, (I/1)

| Ansatz | Maleimidobenzoesäurechlorid | 10.00 g (42.5 mMol) |
|---|---|---|
| | Iminodiessigsäure | 34.0 g (255 mMol) |
| | Triethylamin | 35.4 g (340 mMol) |
| | Dioxan | 240 ml |
| | Wasser | 480 ml |

Maleimidobenzoesäurechlorid, wird durch Erwärmen in Dioxan gelöst und am Eisbad auf 0°C gekühlt. Dann wird eine Lösung Iminodiessigsäure in Wasser und Triethylamin langsam zugetropft. Dabei bildet sich ein farbloser Niederschlag. Die Suspension wird durch Entfernen des Eisbads auf Raumtemperatur gewärmt und noch weitere zwei Stunden bei dieser Temperatur gerührt. Dabei bildet sich eine gelbe Lösung.

Das Dioxan wird abdestilliert und pH3 mit 2n Salzsäure eingestellt, dann dreimal mit jeweils 30 ml Ethylacetat extrahiert. Es wird über Natriumsulfat getrocknet, filtriert und das Lösungsmittel im Vakuum abdestilliert.

Das Rohprodukt wird zur Reinigung in wenig Dioxan (5ml) gelöst und die Lösung wird mit Diethylether versetzt. Das dabei ausgefallene Nebenprodukt wird abfiltriert, das Lösungsmittel im Vakuum abdestilliert und die hellgelben Kristalle in Diethylether digeriert., abfiltriert und im Vakuum getrocknet.

Ausbeute: 8,80 g (65 % d. Th.); hellgelbe Kristalle

b) Pfropfen von N-(4-Maleimidobenzoyl)-nitrilo-diessigsäure auf Polypropylen

Spritzgegossene Polypropylen Prüfstäbe (Fa. Borealis AG) werden durch Spülen mit Aceton und anschließenden Trockenen bei 50°C von Verunreinigungen befreit. Anschließend werden die Proben in ein N-(4-Maleimidobenzoyl)-nitrilodiessigsäure/Benzophenon-Bad getaucht, wobei als Lösungsmittel Toluol eingesetzt wird. Die Tauchzeit wurde zwischen 10 und 120 min variiert, Die getrockneten Proben werden mittels einer IST-UV-Bandanlage vom Typ Minicure U-350-M bestrahlt, wobei bei einer Bandgeschwindigkeit von 0.5 m/min zufrieden stellende Pfropfergebnisse erzielt wurden. Für die Bestimmung der Pfropfausbeuten werden die Proben nachfolgend mit Toluol gespült und getrocknet.

Die jeweiligen Behandlungszeiten sind in der Tabelle 1 aufgeführt.

Die erhaltenen gepfropften Polypropylene sind geruchlos und in Abhängigkeit von der aufgepfropften Menge Monomer leicht gelblich bis leicht rosa. Die Pfropfausbeute wird durch ATR-Infrarotspektroskopie "Golden Gate" aus den Differenzmessungen vor und nach dem Bestrahlen bestimmt. Die wichtigen IR-Banden für die Auswertung (durch Integration der Fläche) sind:

- die Carbonyl-Bande (C=O) bei ca. 1725 $cm^{-1}$
- die aromatische Bande (-C=C-)bei ca. 1605 $cm^{-1}$
- sowie als Referenz, die $CH_3$-Bande des Polypropylens bei ca. 2723 $cm^{-1}$

Tabelle 1

| *N-(4-Maleimidobenzoyl)-nitrilo- diessigsäure / Benzophenon Konzentration [mol/l]* | Behandlungszeit [min] | Relative Menge gepfropftes Monomer [%] | Pfropfausbeute [%] |
|---|---|---|---|
| 0.1 | 10 | 87 | 42 |
| 0.1 | 30 | 93 | 38 |
| 0.1 | 120 | 100 | 32 |
| 0.02 | 10 | 83 | 44 |
| 0.02 | 30 | 87 | 41 |
| 0.02 | 120 | 92 | 38 |

Herstellungs-Beispiel 2:

a) Herstellung von N-(11-Maleinimidoundecanoyl)-asparaginsäure

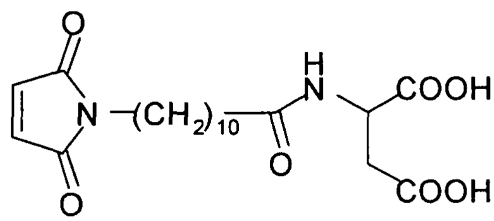

, (I/2)

| | | |
|---|---|---|
| Ansatz | Maleimidoundecansäure | 2.00 g ( 7.04 mMol) |
| | Dicyclohexylcarbodiimid | 1.60 g ( 7 74 mMol) |
| | N-Hydroxysuccinimid | 0.89 g ( 7.74 mMol) |
| | Asparaginsaure | 0.94 g ( 7.04 mMol) |
| | Triethylamin | 1.44 g (14.12 mMol) |
| | Wasser | 8 ml |
| | Dioxan | 23 ml |

Maleimidoundecansäure, Dicyclohexylcarbodiimid und N-Hydroxysuccinimid werden in destilliertem Dioxan gelöst und 30 min bei Raumtemperatur gerührt, wobei sich ein farbloser Niederschlag bildet. Die Suspension wird mit einem Eisbad auf 0°C abgekühlt und es wird langsam eine Lösung von Asparaginsäure in Wasser und Triethylamin zugetropft.

Dann wird über Nacht gerührt, filtriert, der Filterkuchen wird gründlich mit Wasser gewaschen und aus dem Filtrat wird das Dioxan abdestilliert. Der Rückstand wird in Wasser und Ethylacetat (1:1) aufgenommen und die organische Phase wird verworfen.

Die wässerige Phase wird noch einmal mit Ethylacetat gewaschen, dann mit 2n HCl auf pH3 eingestellt, wobei das Produkt ausölt. Man extrahiert dreimal mit 50 ml Ethylacetat, trocknet über Natriumsulfat, filtriert und destilliert das Lösungsmittel ab. Das ölige Rohprodukt wird säulenchromatographisch (35fache Menge Kieselgel) mit einem Gemisch aus Toluol, Methanol und Eisessig (40:5:2) gereinigt. Man erhält ein hellgelbes Öl, das in kaltem Petrolether zur Kristallisation gebracht werden kann.

Ausbeute: 1.61 g (62 % d. Th.); hellbeige Kristalle

b) Pfropfen von N-(11-Maleinimidoundecanoyl)-asparaginsäure auf Polypropylen

Spritzgegossene Polypropylen Prüfstäbe (Fa. Borealis AG) werden unter den gleichen Bedingungen wie in Beispiel 1 mit einer Mischungen aus N-(11-Maleinimidoundecanoyl)-asparaginsäure/Benzophenon behandelt. Die dabei erhaltenen gepfropften Polypropylene sind geruchlos und in Abhängigkeit von der aufgepfropften Menge Monomer leicht gelblich bis leicht rosa. Die gepfropften Polypropylene werden analog dem Beispiel 1 charakterisiert.

Tabelle 2

| N-(11-Maleinimidoundecanoyl)-asparaginsäure / *Benzophenon Konzentration [mol/l]* | Behandlungszeit [min] | Relative Menge gepfropftes Monomer [%] | Pfropfausbeute [%] |
|---|---|---|---|
| 0.1 | 10 | 92 | 51 |
| 0.1 | 30 | 95 | 48 |
| 0.1 | 120 | 100 | 46 |

Tabelle 2 (fortgesetzt)

| N-(11-Maleinimidoundecanoyl)-asparaginsäure / *Benzophenon Konzentration [mol/l]* | Behandlungszeit [min] | Relative Menge gepfropftes Monomer [%] | Pfropfausbeute [%] |
|---|---|---|---|
| 0.02 | 10 | 88 | 53 |
| 0.02 | 30 | 92 | 52 |
| 0.02 | 120 | 95 | 48 |

Herstellungs-Beispiel 3:

a) Herstellung von N-(11-Maleinimidoundecanoyl)- 5-aminophenanthrolin

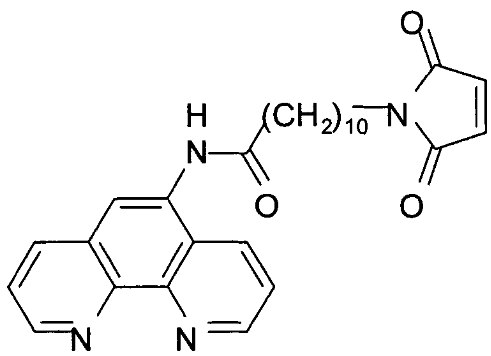

, (I/3)

| | | |
|---|---|---|
| Ansatz | Maleimidoundecansäurechlorid | 9.07 g (30 mMol) |
| | 5-Amino-o-phenanthrolin | 6.03 g (30 mMol) |
| | Triethylamin | 8.85 g (85 mMol) |
| | Dioxan | 120 ml |

Maleimidoundecansäurechlorid wird in wasserfreiem Dioxan gelöst und unter Eiskühlung werden 5-Amino-o-phenanthrolin und Triethylamin, gelöst in wasserfreiem Dioxan langsam zugetropft. Nach kurzer Zeit bildet sich ein weißer Niederschlag aus Triethylaminhydrochlorid. Die Suspension wird über Nacht bei Raumtemperatur gerührt, der gebildete Niederschlag wird abfiltriert und die Lösung wird im Vakuum eingedampft. Das braune Öl wird in 100 ml 2 N HCl aufgenommen und zweimal mit je 50 ml Ethylacetat extrahiert. Die wässerige Phase wird vorsichtig mit 1 N NaOH auf pH 8 gestellt und mit Ethylacetat extrahiert. Die organische Phase wird über Natriumsulfat getrocknet, filtriert und eingedampft. 9,52 g (68 %) Ausbeute: 9,52 g (68 % d. Th.); hellbraunes Öl

b) Pfropfen von N-(11-Maleinimidoundecanoyl)-5-aminophenanthrolin auf Polypropylen

Spritzgegossene Polypropylen-Prüfstäbe (Fa. Borealis AG) werden unter den gleichen Bedingungen, wie im Beispiel 1 beschrieben, mit einer Mischung aus N-(11-*Maleinimidoundecanoyl)-5-aminophenanthrolin*/Benzophenon behandelt. Die dabei erhaltenen gepfropften Polypropylene sind geruchlos und in Abhängigkeit von der aufgepfropften Menge Monomer leicht gelblich bis leicht rosa. Die gepfropften Polypropylene werden analog dem Beispiel 1 charakterisiert.

Tabelle 3

| N-(11-Maleinimidoundecanoyl)-5-aminophenanthrolin / *Benzophenon Konzentration [mol/l]* | Behandlungszeit [min] | Relative Menge gepfropftes Monomer [%] | Pfropfausbeute [%] |
|---|---|---|---|
| 0.1 | 10 | 87 | 47 |
| 0.1 | 30 | 100 | 43 |
| 0.1 | 120 | 98 | 40 |
| 0.02 | 10 | 82 | 49 |
| 0.02 | 30 | 87 | 45 |
| 0.02 | 120 | 92 | 43 |

Herstellungs-Beispiel 4:

a1) Herstellung von 3-(11-Hydroxy-undecyl)pentan-2,4-dion

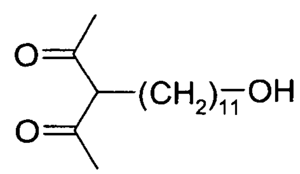

| | | |
|---|---|---|
| Ansatz | 11-Brom-undecan-1-ol | 20.0g (79,6 mMol) |
| | 2,4-Pentandion | 18.4 g (184 mMol) |
| | Kaliumcarbonat | 23.3 g (168 mMol) |
| | Kaliumiodid | 2.56 g ( 20 mMol) |
| | Aceton (abs.) | 250 ml |

In einem 500 ml Dreihalskolben wird unter $N_2$-Atmosphäre eine Suspension von Kaliumcarbonat, Kaliumiodid und 11-Bromundecan-1-ol in abs. Aceton hergestellt. Zu dieser Mischung wird das 2,4-Pentandion zugetropft und die Suspension wird für sechs Stunden auf Rückfluss gekocht. Anschließend wird die Reaktionsmischung am Rotationsverdampfer auf ca. 50 ml eingeengt und auf 2N Salzsäure gegossen. Die so erhaltene Lösung wird in einem Scheidetrichter drei Mal mit Diethylether extrahiert und die vereinigten organischen Phasen werden zweimal mit Wasser gewaschen. Die organische Phase wird über Natriumsulfat getrocknet und am Rotationsverdampfer vollständig eingedampft. Das so erhaltene gelbe Öl wird durch Kristallisation aus PE gereinigt.

Ausbeute: 11.4 g (53 % d. Th.); weißer kristalliner Feststoff

a2) Herstellung von (2,5-Dioxo-2,5-dihydro-pyrrol-1-yl)-essigsäure 12-acetyl-13-oxotetradecyl ester

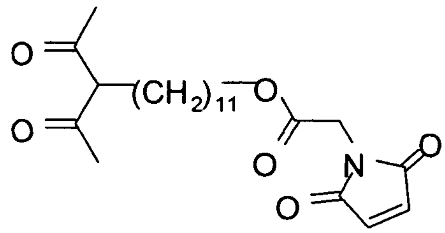

, (I/4)

| Ansatz | 3-(11-Hydroxy-undecyl)-pentan-2,4-dion | 1.0 g (3.7 mMol) |
|---|---|---|
| | Maleimidoessigsäurechlorid | 1.3 g (7.4 mMol) |
| | Pyridin | 4 ml |
| | Diethylether | 26 ml |

In einem 250 ml Dreihalskolben wird unter $N_2$-Atmosphäre der Alkohol in dem Gemisch aus Diethylether und Pyridin vorgelegt. Die Reaktionsmischung wird nun auf 0°C gekühlt und anschließend wird das Maleimidoessigsäurechlorid zu dieser Reaktionslösung über den Zeitraum von zwei Stunden zugetropft. Anschließend wird die Reaktionslösung für 12 Stunden bei Raumtemperatur gerührt. Nach vollständiger Umsetzung des Alkohols wird die Reaktionsmischung zwei Mal mit 2N Salzsäure und anschließend drei Mal mit gesättigter Natriumhydrogencarbonatlösung ausgeschüttelt. Die organische Phase wird nun mit Natriumsulfat getrocknet und das Lösungsmittel wird am Rotationsverdampfer abgezogen.

Ausbeute: 1.3 g (85 % d. Th.); hellgelber Feststoff

b) Pfropfen von (2,5-Dioxo-2,5-dihydro-pyrrol-1-yl)-essigsäure-12-acetyl-13-oxotetradecyl ester auf Polypropylen

100 Gew.-Teile Polypropylen werden unter den gleichen Bedingungen wie im Beispiel 1 beschrieben mit den entsprechenden Mengen (2,5-Dioxo-2,5-dihydro-pyrrol-1-yl)-essigsäure 12-acetyl-13-oxo-tetradecyl ester (vgl. Tabelle 4) umgesetzt.

Die dabei erhaltenen gepfropften Polypropylene sind geruchlos und in Abhängigkeit von der aufgepfropften Menge Monomer farblos bis rosa und weisen gegenüber dem eingesetzten Polypropylen nahezu unveränderte Fließfähigkeit auf. Die gepfropften Polypropylene werden analog dem Beispiel 1 aufgearbeitet und charakterisiert.

Tabelle 4

| (2,5-Dioxo-2,5-dihydro-pyrrol-1-yl)-essigsäure 12-acetyl-13-oxotetradecyl ester [Gew.-Teile] | ® Luperox 130 [Gew.-Teile] | Pfropfausbeute [%] |
|---|---|---|
| 0,25 | 0,5 | 97 |
| 0,5 | 0,5 | 90 |
| 1 | 0,5 | 87 |
| 2 | 0,5 | 83 |
| 4 | 0,5 | 80 |

Herstellungs-Beispiel 5:

Synthese von 2-Methacrylsäure 12-acetyl-13-oxo-tetradecylester

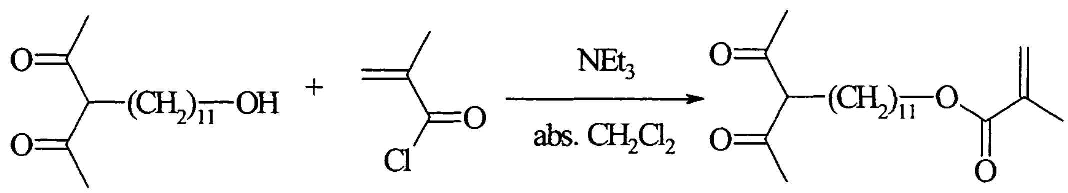


, (III/1)

| | | |
|---|---|---|
| Ansatz | 3.00 g (11.1 mMol) | 3-(11-Hydroxy-undecyl)pentan-2,4-dion |
| | 1.40 g (13.3 mMol) | Methacrylsäurechlorid |
| | 1.35 g (13.3 mMol) | Triethylamin |
| | 80 ml | abs. Methylenchlorid |

Apparatur: Dreihalskolben, $N_2$-Ballon, Tropftrichter, Magnetrührer

Durchführung:

3-(11-Hydroxy-undecyl)pentan-2,4-dion, hergestellt wie im Beispiel 4 unter a) angegeben, gelöst in 30 ml Methylenchlorid, wird in einem Dreihalskolben vorgelegt und es wird Methacrylsäurechlorid, ebenfalls gelöst in 40 ml Methylenchlorid, innerhalb von 30 min zugetropft. Die Reaktionslösung wird dann 30 min lang gerührt und anschließend wird Triethylamin in 10 ml Methylenchlorid zur Reaktionslösung innerhalb von 10 min zugetropft. Die Reaktionsmischung wird für weitere zwei Stunden gerührt, das Methylenchlorid wird am Rotationsverdampfer abgezogen und der Rückstand wird in Ethylacetat aufgenommen. Die organische Phase wird drei Mal mit gesättigte Natriumhydrogencarbonat-Lösung und ein Mal mit gesättigter Natriumchloridlösung ausgeschüttelt, danach wird über Natriumsulfat getrocknet und das Lösungsmittel wird abgedampft.
Ausbeute: 3.34 g (89 % d. Th.); gelbes Öl

b) Pfropfen von *2-Methacrylsäure 12-acetyl-13-oxo-tetradecylester* auf Polypropylen

Spritzgegossene Polypropylen-Prüfstäbe (Fa. Borealis AG) werden durch Spülen mit Aceton und anschließenden Trockenen bei 50°C von Verunreinigungen befreit. Anschließend werden die Proben in ein Methacrylat/Benzophenon-Bad getaucht, wobei als Lösungsmittel Ethylacetat eingesetzt wird. Die Tauchzeit wird zwischen 10 und 120 min variiert, Die getrockneten Proben werden mittels einer IST-UV-Bandanlage vom Typ Minicure U-350-M bestrahlt, wobei bei einer Bandgeschwindigkeit von 0.5 m/min zufrieden stellende Pfropfergebnisse erzielt wurden. Für die Bestimmung der Pfropfausbeuten werden die Proben nachfolgend mit Toluol gespült und getrocknet.
Die jeweiligen Behandlungszeiten sind in der Tabelle 5 aufgeführt.
Die erhaltenen gepfropften Polypropylene sind geruchlos und in Abhängigkeit von der aufgepfropften Menge Monomer farblos bis leicht rosa und weisen gegenüber dem eingesetzten Polypropylen nahezu unveränderte Fließfähigkeit auf. Die Pfropfausbeute wird durch ATR-Infrarotspektroskopie "Golden Gate" aus den Differenzmessungen vor und nach dem Bestrahlen bestimmt. Die wichtigen IR-Banden für die Auswertung (durch Integration der Fläche) sind :

- die Carbonyl-Bande (C=O) des Esters bei ca. 1725 $cm^{-1}$
- sowie als Referenz, die $CH_3$-Bande des Polypropylens bei ca. 2723 $cm^{-1}$

Tabelle 5

| 2-Methacrylsäure 12-acetyl-13-oxo-tetradecylester/ Benzophenon *Konzentration [mol/l]* | Behandlungszeit [min] | Relative Menge gepfropftes Monomer [%] | Pfropfausbeute [%] |
|---|---|---|---|
| 0.1 | 10 | 87 | 66 |
| 0.1 | 30 | 96 | 61 |
| 0.1 | 120 | 100 | 58 |
| 0.02 | 10 | 82 | 72 |
| 0.02 | 30 | 86 | 68 |
| 0.02 | 120 | 92 | 62 |

<u>Herstellungs-Beispiel 6:</u>

Synthese von 4-Azidobenzoesäure-12-acetyl-13-oxo-tetradecylester

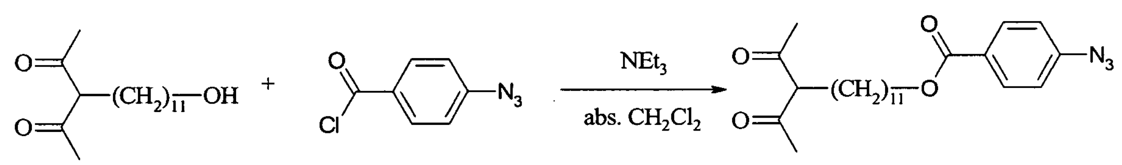


, (II/1)

| | | |
|---|---|---|
| Ansatz | 3.90 g (14.4 mMol) | 3-(11-Hydroxy-undecyl)pentan-2,4-dion |
| | 3.15 g (17.3 mMol) | 4-Azidobenzoesäurechlorid |
| | 1.75 g (17.3 mMol) | Triethylamin |
| | 120 ml | abs. Methylenchlorid |

Apparatur: Dreihalskolben, $N_2$-Ballon, Tropftrichter, Magnetrührer

Durchführung:

3-(11-Hydroxy-undecyl)pentan-2,4-dion, hergestellt wie im Beispiel 4 unter a) angegeben, gelöst in 50 ml Methylenchlorid, wird in einem Dreihalskolben vorgelegt und es wird 4-Azidobenzoesäurechlorid, ebenfalls gelöst in 60 ml Methylenchlorid innerhalb von 30 min zugetropft. Die Reaktionslösung wird dann 30 min lang gerührt und anschließend wird Triethylamin in 10 ml Methylenchlorid zur Reaktionslösung innerhalb von 10 min zugetropft. Die Reaktionsmischung wird für weitere zwei Stunden gerührt, das Methylenchlorid wird am Rotationsverdampfer abgezogen und der Rückstand wird in Ethylacetat aufgenommen. Die organische Phase wird dreimal mit gesättigter Natriumhydrogencarbonat-Lösung und einmal mit gesättigter Natriumchloridlösung ausgeschüttelt, danach wird über Natriumsulfat getrocknet und das Lösungsmittel wird abgedampft.

Ausbeute: 4.66 g (78 % d. Th.); gelbes Öl

b) Pfropfen von *4-Azidobenzoesäure-12-acetyl-13-oxo-tetradecylester* auf Polypropylen

Spritzgegossene Polypropylen-Prüfstäbe (Fa. Borealis AG) werden durch Spülen mit Aceton und anschließenden Trockenen bei 50°C von Verunreinigungen befreit. Anschließend werden die Proben in ein Azidbad getaucht

wobei als Lösungsmittel Toluol, eingesetzt wird. Die Aufbewahrung von Aziden, Azidlösungen und Azidbädern wird immer unter Abwesenheit von Licht gewährleistet, um eine mögliche Zersetzung der Azidfunktion zu verhindern. Die Tauchzeit wird zwischen 10 und 120 min variiert, Die getrockneten Proben werden mittels einer IST-UV-Bandanlage vom Typ Minicure U-350-M bestrahlt, wobei bei einer Bandgeschwindigkeit von 0.5 m/min zufrieden stellende Pfropfergebnisse erzielt wurden. Für die Bestimmung der Pfropfausbeuten werden die Proben nachfolgend mit Toluol gespült und getrocknet.

Die jeweiligen Behandlungszeiten sind in der Tabelle 6 aufgeführt.

Die erhaltenen gepfropften Polypropylene sind geruchlos und in Abhängigkeit von der aufgepfropften Menge Monomer farblos bis leicht rosa und weisen gegenüber dem eingesetzten Polypropylen nahezu unveränderte Fließfähigkeit auf. Die Pfropfausbeute wird durch ATR-Infrarotspektroskopie "Golden Gate" aus den Differenzmessungen vor und nach dem Bestrahlen bestimmt. Die wichtigen IR-Banden für die Auswertung (durch Integration der Fläche) sind:

- die Azid-Bande ($N_3$) bei ca. 2125 $cm^{-1}$
- die Carbonyl-Bande (C=O) des Esters bei ca. 1725 $cm^{-1}$
- die aromatische Bande (-C=C-)bei ca. 1605 $cm^{-1}$
- sowie als Referenz, die $CH_3$-Bande des Polypropylens bei ca. 2723 $cm^{-1}$

Tabelle 6

| 4-Azidobenzoesäure-12-acetyl-13-oxo-tetradecylester *Konzentration [mol/l]* | Behandlungszeit [min] | Relative Menge gepfropftes Monomer [%] | Pfropfausbeute [%] |
|---|---|---|---|
| 0.1 | 10 | 100 | 50 |
| 0.1 | 30 | 98 | 50 |
| 0.1 | 120 | 88 | 56 |
| 0.02 | 10 | 34 | 62 |
| 0.02 | 30 | 58 | 60 |
| 0.02 | 120 | 64 | 57 |

Vergleichsbeispiel A

Polypropylen wird unter analogen Bedingungen mit N-Phenylmaleimid unter Zuhilfenahme von Benzophenon gepfropft (vgl. Tabelle A). Die gepfropften Polypropylene werden analog dem Beispiel 1 charakterisiert.

Tabelle A

| N-Phenylmaleimid/ Benzophenon *Konzentration [mol/l]* | Behandlungszeit [min] | Relative Menge gepfropftes Monomer [%] | Pfropfausbeute [%] |
|---|---|---|---|
| 0.1 | 10 | 86 | 41 |
| 0.1 | 30 | 96 | 40 |
| 0.1 | 120 | 100 | 38 |
| 0.02 | 10 | 64 | 48 |
| 0.02 | 30 | 72 | 44 |
| 0.02 | 120 | 84 | 41 |

Vergleichsbeispiel B

Polypropylen wird unter analogen Bedingungen mit 4-Maleimidobenzoesäure unter zu Hilfenahme von Benzophenon gepfropft (vgl. Tabelle B). Die gepfropften Polypropylene werden analog dem Beispiel 1 charakterisiert.

Tabelle B

| 4-Maleimidobenzoesäure / Benzophenon *Konzentration [mol/l]* | Behandlungszeit [min] | Relative Menge gepfropftes Monomer [%] | Pfropfausbeute [%] |
|---|---|---|---|
| 0.1 | 10 | 83 | 32 |
| 0.1 | 30 | 92 | 28 |
| 0.1 | 120 | 100 | 27 |
| 0.02 | 10 | 74 | 36 |
| 0.02 | 30 | 77 | 33 |
| 0.02 | 120 | 85 | 29 |

Vergleichsbeispiel C

Polypropylen wird unter analogen Bedingungen mit Acetoacetoxyethylmethacrylat unter Zuhilfenahme von Benzophenon gepfropft (vgl. Tabelle C). Die gepfropften Polypropylene werden analog dem Beispiel 5 charakterisiert.

Tabelle C

| 4-Maleimidobenzoesäure / Benzophenon *Konzentration (mol/l]* | Behandlungszeit [min] | Relative Menge gepfropftes Monomer [%] | Pfropfausbeute [%] |
|---|---|---|---|
| 0.1 | 10 | 98 | 58 |
| 0.1 | 30 | 100 | 57 |
| 0.1 | 120 | 89 | 63 |
| 0.02 | 10 | 83 | 62 |
| 0.02 | 30 | 87 | 61 |
| 0.02 | 120 | 91 | 58 |

Anwendungs-Beispiel 1:

Metallisierung der Polymerisate

Die gepfropften Propylenpolymerisate wurden ohne vorangehende chemische Oberflächenvorbehandlung nach einem bspw. für ABS-Kunststoffe bekannten Verfahren (DE 119 77 20 C1) metallisiert. Die Palladiumbekeimung erfolgte bei 35°C innerhalb von 10 min, die Reduktion zu metallischem Palladium bei 35°C innerhalb von 3 min.

Die anschließende chemische Nickelabscheidung erfolgte bei 65°C innerhalb von 15 min. Danach wurde bei 20°C innerhalb von 30 min verkupfert, wobei Schichtdicken im Bereich von 25 bis 30 µm erhalten wurden.

Als Nutzschicht kann dann z.B. Kupfer, Nickel oder Gold aufgebracht werden.

Prüfung der Haftung der Metallbeschichtungen:

Die Haftung der Kupferbeschichtung auf den nach den bzw. analog zu den Herstellungs-Beispielen 1 bis 6 und den Vergleichs-Beispielen A, B und C hergestellten gepfropften Polymeren, sowie auf dem unbehandelten Polypropylen wurde mittels Gitterschnitt-Test (DIN EN ISO 2409) geprüft. Die Ergebnisse sind in der Tabelle 7 zusammengefasst:

Tabellle 7

| Gepfropftes Polymer gemäß | Gitterschnitt |
|---|---|
| Herstellungs-Beispiel 1 | 2 |
| Herstellungs-Beispiel 2 | 1 |

Tabellle 7 (fortgesetzt)

| Gepfropftes Polymer gemäß | Gitterschnitt |
|---|---|
| Herstellungs-Beispiel 3 | 0 |
| Herstellungs-Beispiel 4 | 0 |
| Herstellungs-Beispiel 5 | 0 |
| Herstellungs-Beispiel 6 | 0 |
| Vergleichs-Beispiel A | * |
| Vergleichs-Beispiel B | 5 |
| Vergleichs-Beispiel C | 3 |
| Unbehandeltes Polypropylen | * |

* keine Metallisierung möglich bzw. Metallabscheidung nicht wischfest.

Aus dem Vergleich zwischen den erfindungsgemäßen Herstellungs-Beispielen 1 bis 6 und den Vergleichs-Beispielen A und B ist zu erkennen, dass bei den mit N-Phenylmaleinimid bzw. 4-Maleimidobenzoesäure gepfropften Polypropylenen gemäß den Vergleichsbeispielen A und B keine bzw. nur sehr geringe Haftung im Vergleich zu den mit den neuen, die Chelatbildung begünstigenden Monomer-Verbindungen der allgemeinen Formeln I bis III gepfropften Proben gemäß den Herstellungs-Beispielen 1 bis 6 erzielt wird.

Anwendungs-Beispiel 2:

Unter Einhaltung der in der Kunststofftechnik üblichen Verfahrensparameter wurden Polyethylen, Polyethylenterephthalat, Polystyren, Polymethylmethacrylat, Polyamid 6/6, Polycarbonat, Polyacrylnitril durch Pfropfen mit den in den Herstellungs-Beispielen 1 bis 6 genannten Monomeren modifiziert. Als Lösungsmittel hierfür kommen je nach Polymer n-Hexan, n-Heptan, Toluol, Ethylacetat, Diethylether, bzw. n-Heptan/Isopropanol (1:1) oder Ähnliches in Frage. Danach erfolgte die Metallabscheidung wie im Anwendungs-Beispiel 1 beschrieben.

Die Haftfestigkeit der Metallisierungsschicht wurde mit einem Gitterschnittgerät, PEG-Universal, Typ 3410 (BYK Gardner) geprüft, die Ergebnisse sind in der Tabelle 8 zusammengefasst.

Tabelle 8:

| Modifikation gemäß: | PP* | PE* | PET* | PS | PMMA | PA | PC | PAN |
|---|---|---|---|---|---|---|---|---|
| HerstellungsBeispiel 1 | 2 | 3 | 4 | 2 | 2 | 0 | 3 | 2 |
| HerstellungsBeispiel 2 | 1 | 2 | 2 | 1 | 0 | 0 | 2 | 1 |
| HerstellungsBeispiel 3 | 0 | 1 | 1 | 0 | 0 | 0 | 2 | 0 |
| HerstellungsBeispiel 4 | 0 | 0 | 1 | 0 | 0 | 0 | 2 | 0 |
| HerstellungsBeispiel 5 | 0 | 0 | 1 | 0 | 0 | 0 | 2 | 0 |
| HerstellungsBeispiel 6 | 0 | 0 | 0 | 0 | 0 | 0 | 1 | 0 |
| VergleichsBeispiel A | - | - | - | 5 | 4 | 4 | - | 5 |
| VergleichsBeispiel B | 5 | 5 | - | 3 | 4 | 3 | - | 4 |
| VergleichsBeispiel C | 3 | 5 | - | 3 | 0 | 2 | - | 2 |
| unbehandelt | - | - | 5 | 5 | 5 | 4 | * | 5 |

Anmerkungen:
- keine Metallabscheidung möglich
PE: Polypropylen
PET: Polyethylenterephthalat
PS: Polystyren
PA: Polyamid-6,6
PC: Polycarbonat
PAN: Polyacrylnitril
*: extrusionsgefertigte Proben (restl. Proben: spritzguss-gefertigt)

Die beiden Anwendungs-Beispiele 1 und 2 zeigen den überraschend hohen Effekt der Steigerung der Haftfestigkeit von galvanisch aufgebrachten Metallüberzügen auf ansonsten dieser Technologie praktisch nicht oder nur nach Einsatz aggressiver Oberflächen-Aufschluss-Chemikalien zugänglichen Polymerisaten nach deren Modifizierung mit den neuen Monomeren.

## Patentansprüche

1. Oberflächenmodifiziertes Polymer bzw. Copolymer, welches einer Beschichtung mit einem haftfesten Metall-Überzug durch stromlose und/oder galvanische Abscheidung von Metallen zugänglich gemacht ist, bzw. daraus, bevorzugt durch Thermoplast-Formgebung, gefertigte Gegenstände, Formkörper, Profile, Folien, Bänder, Fasern, Granulate od.dgl.,
**dadurch gekennzeichnet,**

   - **dass** es bzw. sie mit zumindest einem - einer stromlosen Metallabscheidung und/oder Galvanisierung als solches im Wesentlichen nicht oder nur schwierig zugänglichen Grund-(Co-)Polymerisat auf Basis mindestens eines Polyolefins, vorzugsweise $C_1$-$C_{17}$-Polyalkylen, insbesondere Polyethylen, Polypropylen, Polystyrol, Polyvinylhalogenid, Poly-$C_1$-$C_{17}$-alkyl(meth)acrylat oder Polyacrylnitril sowie weiters mindestens eines Polyethylenterephthalats, Polyacetals, Polycarbonats und/oder Polyamids, gebildet ist bzw. sind, wobei das Grund-(Co-)Polymerisat, entweder auf der gesamten Oberfläche oder auf jeweils für eine Metallisierung vorgesehenen Teilbereichen der Oberfläche

     mit mindestens einem Maleinimid-Derivat der allgemeinen Formel I

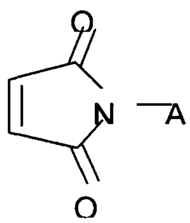

, (I)

     einem aromatischen Azid der Formel II

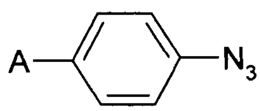

, (II)

   oder einem Methacrylat bzw. Acrylat der Formel III bzw. IV

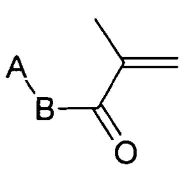

, (III)

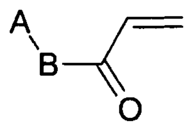

, (IV)

in welchen Formeln I bis IV

B für eine -O- oder -NH- Gruppe steht und in der
A die folgenden Bedeutungen hat:

a) einen Rest der allgemeinen Formel

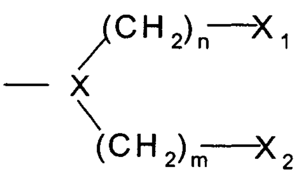

, (Ia)

worin

X für ≡CH oder ≡N steht,
$X_1$ und $X_2$ gleich oder verschieden die Reste -OH, -COOH, $-CONH_2$, $CO-R_2$ $-CO-(CH_2)_p-CO-R_2$, -C (=N-OH)$-(CH_2)_p$-C(=N-OH)$-R_2$ bedeuten,

wobei entweder

$X_1$ oder $X_2$ auch für -H stehen kann,
$R_2$ für einen $C_1$-$C_6$-Alkylrest oder einen $C_6$-$C_{12}$ Arylrest steht und
n, m, p jeweils für eine Zahl von 0 bis 3 stehen,

b) einen der Reste der allgemeinen Formeln

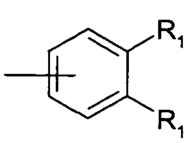

oder

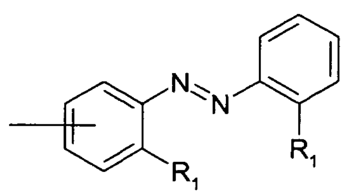

, (Ib)

worin $R_1$ jeweils für eine der Gruppen -H, -OH, -COOH, $CONH_2$, $-NH_2$, und/oder - NO steht, wobei die beiden $R_1$ untereinander gleich oder verschieden sein können,

c) einen der Reste der allgemeinen Formeln

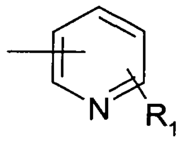
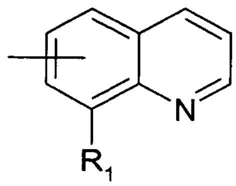
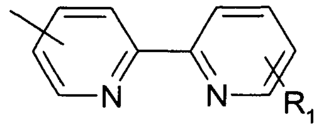
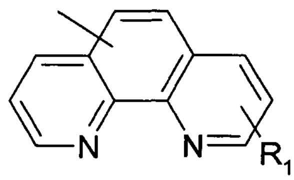
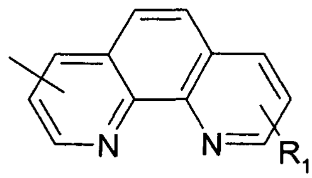

, (Ic)

worin $R_1$ die unter b) angegebene Bedeutung hat,

d) einen Rest der allgemeinen Formel

$$- S_1 -Y- S_2 - Z , \quad (Id)$$

worin

| | |
|---|---|
| $S_1$ und $S_2$ | für einen $C_0$-$C_{10}$-Alkylenrest oder einen $C_6$-$C_{12}$ Arylenrest und |
| Y | für -CO-O-, -OCO-, -NH-CO-, -CO-NH-, -NH-CO-O-, -NH-CO-NH-, -OCO-NH- oder -O- steht, und |
| Z | für einen der Reste |

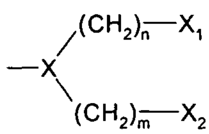
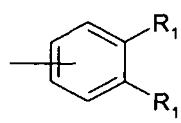
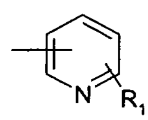
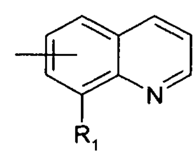
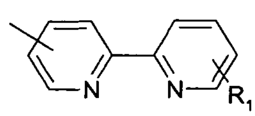
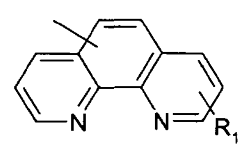
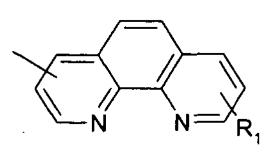

steht, worin

X für

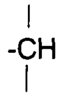 oder 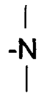

steht und die Reste

| | |
|---|---|
| $X_1$ und $X_2$ | die unter a) und der Rest |
| $R_1$ | die unter b) angegebenen Bedeutungen haben |

radikalisch gepfropft ist.

**2.** Polymer nach Anspruch 1 oder 2, **dadurch gekennzeichnet, dass** es mit einem der im Anspruch 1 genannten Grund-(Co-)Polymerisate gebildet ist, das mit entweder auf der gesamten Oberfläche oder auf jeweils für eine Metallisierung vorgesehenen Teilbereichen der Oberfläche einem Maleinimid-Derivat-Monomer der Formel

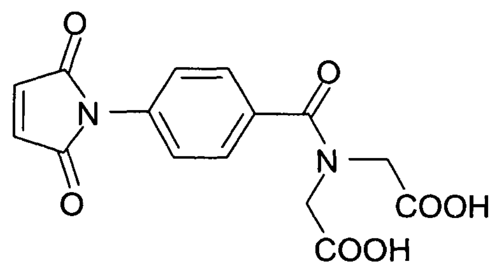

, (I/1)

und/oder der Formel

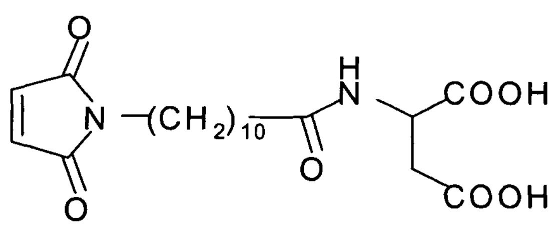

, (I/2)

und/oder der Formel

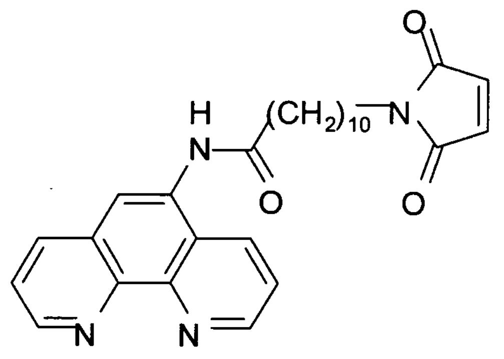

, (I/3)

und/oder der Formel

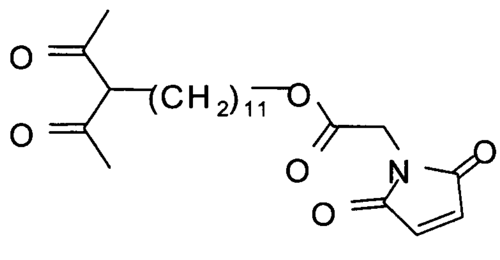

, (I/4)

und/oder der Formel

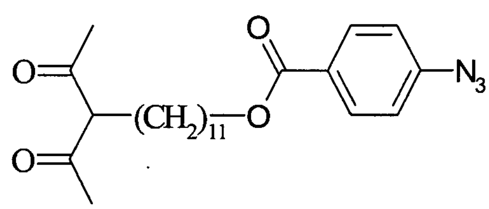

, (II/1)

und/oder der Formel

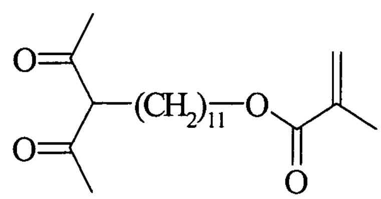

, (III/1)

gepfropft ist.

**3.** Verfahren zur Herstellung von neuen oberflächenmodifizierten Polymeren nach Anspruch 1 oder 2, welche einer Beschichtung mit einem haftfesten Metall-Überzug durch stromlose und/oder galvanische Abscheidung von Metallen zugänglich gemacht sind bzw. von daraus, bevorzugt durch Thermoplast-Formgebung, gefertigten Gegenständen, Formkörpern, Profilen, Folien, Bändern, Fasern od.dgl., **dadurch gekennzeichnet,**

- **dass** ein einer stromlosen Metallabscheidung und/oder Galvanisierung im wesentlichen nicht oder schwierig zugängliches Grund-(Co-)Polymerisat auf Basis von Polyolefinen, vorzugsweise $C_1$-$C_{17}$-Polyalkylene, insbesondere Polyethylene, Polypropylene, Polystyrole, Polyvinylhalogenide, Poly-$C_1$-$C_{17}$-alkyl(meth)acrylate oder Polyacrylnitrile sowie weiters von Polyethylenterephthalaten, Polycarbonaten und/oder Polyamiden, gebildet ist bzw. sind, wobei das Polymer einer Oberflächenpfropfung mit mindestens einem Monomeren der im Anspruch 1 genannten allgemeinen Formeln I bis IV unterworfen wird.

**4.** Verfahren nach Anspruch 3, **dadurch gekennzeichnet, dass** als für die Oberflächenpfropfung vorgesehenes Momomer mindestens eine der im Anspruch 2 genannten Verbindungen der Formeln I/1, I/2, I/3 und I/4 sowie II/1 und III/1 eingesetzt wird.

**5.** Variante des Verfahrens nach Anspruch 3 oder 4, **dadurch gekennzeichnet,**

- **dass** in einer ersten Stufe im wesentlichen auf die gesamte Oberfläche des genannten Gegenstandes, Formkörpers od.dgl. eine, vorzugsweise zumindest einen Polymerisations-Initiator enthaltende Lösung, Dispersion, Streichmasse, Paste od.dgl., aufgebracht wird, deren wesentliche Komponente durch mindestens ein Monomer der im Anspruch 1 bzw. 2 genannten allgemeinen Formeln I bis IV mit den dort genannten Bedeutungen für die Gruppen - X- und -A oder der Formeln I/1, I/2, I/3, I/4, II/1, III/1 gebildet ist, in dünner Schicht aufgetragen wird,
- **dass** in einer zweiten Stufe, beispielsweise unter Abdeckung aller für die Metallisierung nicht vorgesehenen Teilbereiche der Oberfläche, z.B. mittels Schablone, durch Ausrichtung, Konzentrierung, Bündelung, Fokussierung von Strahlung od.dgl. auf die zu metallisierenden Teilbereiche der Oberfläche, nur in den für eine gewünschte Metallisierung vorgesehenen Teilbereichen der Oberfläche durch Einwirkung von Energie, insbesondere Strahlungsenergie, das genannte Monomere der allgemeinen Formeln I bis IV in die Oberflächenzone des den Gegenstand, Formkörper od.dgl. bildenden Grund-(Co-)Polymerisates pfropf-copolymerisiert wird, und
- **dass** in einer dritten Stufe von den der Einwirkung der Energie, insbesondere Strahlungsenergie, nicht unterworfenen Bereichen der Oberfläche des Gegenstandes, Formkörpers od.dgl. die überschüssigen Monomer-Auftragsschichten, beispielsweise durch lösendes Waschen, durch Wischen od.dgl., entfernt wird (werden).

**6.** Verfahren nach einem der Ansprüche 3 bis 5, **dadurch gekennzeichnet, dass** das jeweilige, für eine übliche galvanotechnische Metall-Beschichtung im wesentlichen ungeeignete Grund- (Co-)Polymerisat mit mindestens einem der funktionellen Momomeren der allgemeinen Formeln I bis IV durch Beschichten, Bestreichen, Bedrucken, Besprühen, Tauchen, Spincoaten, Dipcoaten, Beschichten im Monomer-Nebel od.dgl. beschichtet wird.

**7.** Verfahren nach einem der Ansprüche 3 bis 6, **dadurch gekennzeichnet, dass** als Pfropfaktivator Wasserstoff abstrahierende Verbindungen, vorzugsweise Ketone, insbesondere Benzophenon, eingesetzt werden.

**8.** Verfahren nach einem der Ansprüche 3 bis 7, **dadurch gekennzeichnet, dass** mit dem jeweiligen Monomer oberflächen-imprägnierte bzw. -behandelte Polymere durch UV-, IR-, Laser-, Licht-, Elektronen- oder Mikrowellen-Strahlung oder mittels Plasma gepfopft wird.

**9.** Verfahren nach einem der Ansprüche 3 bis 8, **dadurch gekennzeichnet, dass** zumindest auf Teilbereiche der Oberfläche des Polymer-Gegenstandes, - Formkörpers, od.dgl., eine Lösung oder Dispersion aufgebracht wird, welche zumindest eines der Monomeren der im Anspruch 1 genannten allgemeinen Formel I, worin -X- und -A die dort genannten Bedeutungen haben, insbesondere zumindest eines der Maleinimid-Derivate der im Anspruch 2 genannten Formeln I/1, I/2, I/3, I/4, II/1 oder III/1 in einer Konzentration von 0,01 bis 2 mol/l, vorzugsweise von 0,1 bis 1 mol/l, enthält.

**10.** Verfahren nach einem der Ansprüche 3 bis 9, **dadurch gekennzeichnet, dass** eine Flächenbelegung der zu metallisierenden Oberfläche bzw. Oberflächen-Teilbereiche des Gegenstandes, Formkörpers od.dgl. mit dem in der Aufbringungs-Lösung, Dispersion, Streichmasse, (Druck-)Paste od.dgl. enthaltenen Monomer der allgemeinen Formeln I bis IV auf Werte zwischen 0,00005 und 0,05 mol/$m^2$, bevorzugt von 0,0002 und 0,02 mol/$m^2$, vorgenommen wird.

**11.** Verfahren nach einem der Ansprüche 3 bis 10, **dadurch gekennzeichnet, dass** als Lösungs- oder Dispersionsmittel für das Monomer der allgemeinen Formeln I bis IV Toluol, Methylenchlorid, Aceton und/oder (Ethyl-)Ether eingesetzt wird bzw. werden.

**12.** Verfahren nach einem der Ansprüche 3 bis 11, **dadurch gekennzeichnet, dass** nach Aufbringung der Lösung, Dispersion, (Druck-)Paste od.dgl. des Monomers der allgemeinen Formeln I bis IV zumindest auf Teilbereiche der Oberfläche des Polymer-Gegenstandes, -Formkörpers od.dgl. das Lösungs- bzw. Dispersionsmittel unter Verbleib des Monomers dortselbst abgedampft wird.

**13.** Verfahren zur Herstellung von mit einem Metall haftfest, gegebenenfalls teilweise, z.B. in Form eines Musters, Bildes, einer Schrift od.dgl., oberflächen-beschichteten Gegenständen, Formkörpern, Profilen, Folien, Bändern, Fasern od.dgl., aus einem, gegebenenfalls nur zum Teil, oberflächenmodifizierten Polymer, wobei eine stromlose dünne Erst-Beschichtung mit einem Metall und danach zumindest eine galvanotechnische Beschichtung mit dem gleichen oder mit einem anderen Metall vorgenommen wird,
**dadurch gekennzeichnet,**

- **dass** ein Gegenstand, Formkörper od.dgl., aus einem mit mindestens einem Monomer der allgemeinen Formeln I bis IV oberflächen-gepfropften Polymer auf Basis eines der genannten Arten der Abscheidung eines Metalls nicht oder nur unzulänglich zugänglichen Grund-Polymerisats gemäß Anspruch 1 oder 2, bzw. hergestellt gemäß einem der Ansprüche 3 bis 12 unter Weglassung jeglicher, sonstiger, für eine stromlose Metallabscheidung und/oder Galvanisierung von schwierig zu metallisierenden Polymeren üblicher Vorbehandlung der Oberfläche des genannten Gegenstandes, Formkörpers od.dgl. mit funktionelle Gruppen schaffenden Chemikalien
- direkt mit einer eine Metall-(Komplex-)Verbindung, bevorzugt eine Pd-Metall-Komplex-Verbindung, enthaltenden Metallabscheidungs-Aktivierungslösung in Kontakt gebracht wird,
- wonach die Reduktion zum Metall, insbesondere zu metallischem Pd, unter dessen Bindung an die Oberfläche, erfolgt,
- und der Gegenstand od. dgl. schließlich einem üblichen Galvanik-Metallabscheidungsprozess unterworfen wird.